(19) Europäisches Patentamt
European Patent Office
Office européen des brevets

(11) Publication number: **0 025 270**
**B1**

(12) # EUROPEAN PATENT SPECIFICATION

(45) Date of publication of patent specification: **25.07.84**

(21) Application number: **80302649.1**

(22) Date of filing: **04.08.80**

(51) Int. Cl.³: **C 07 F 9/42**, C 07 F 9/40 //A01N57/20

(54) **Process for the production of branched S-alkyl phosphonodithioic halide intermediates.**

(30) Priority: **31.08.79 US 71465**

(43) Date of publication of application:
**18.03.81 Bulletin 81/11**

(45) Publication of the grant of the patent:
**25.07.84 Bulletin 84/30**

(84) Designated Contracting States:
**AT BE CH DE FR GB IT LI NL**

(56) References cited:
**DE - B - 1 104 506**
**FR - A - 2 371 458**
**FR - A - 2 385 729**

**CHEMICAL ABSTRACTS, vol. 68, no. 7, 12th February 1968, page 2897, no. 29783x Columbus, Ohio, U.S.A. V.D. AKAMSIN et al.: "Estes of phosphorus (III) thio acids. III. Preparation and properties of ethyl (alkylthio) phosphonous acid chlorides"**

**The file contains technical information submitted after the application was filed and not included in this specification**

(73) Proprietor: **RHONE-POULENC AGROCHIMIE**
**14-20, rue Pierre Baizet**
**F-69009 Lyon (FR)**

(72) Inventor: **Fahmy, Mohamed Abdel Hamid**
**16-A Grandview Avenue**
**Edison New Jersey (US)**

(74) Representative: **Chrétien, François**
**RHONE-POULENC AGROCHIMIE BP 9163**
**F-69263 Lyon Cedex 1 (FR)**

**EP 0 025 270 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for the preparation of compounds of the formula

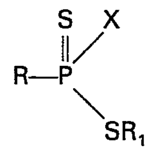

by reaction of

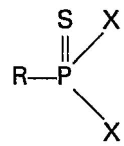

with $R_1SH$ in a solvent, at a temperature of 20°C to 100°C in the presence of a base; in which R is alkyl of 1 to 6 carbon atoms; $R_1$ is tert-alkyl of 4 to 8 carbon atoms and X is halogen.

The compounds prepared by the process of this invention are useful as intermediates for the production of valuable insecticides and nematocides as described in more detail hereinafter.

One aspect of this invention is a simple process for the production of S-tert-alkyl phosphonodithioic halides by the direct addition of thiols to alkylphosphonothioic dihalides.

The synthesis of S-alkyl alkylphosphonothioic halides is usually accomplished by methods other than the direct addition of thiols to alkylphosphonothioic dihalides because direct reaction is normally accompanied by an undesirable side reaction (FR—A—2385729) where both halo atoms in the phosphonothioic dihalide are substituted with the alkyl thiol. The side reaction is a particular problem where normal alkyl thiols are used. Thus, when the synthesis of normal S-alkyl alkyl-phosphonodithioic chlorides is desired, alternative routes are usually employed.

It has been discovered that tert-alkylthiols react smoothly with alkylphosphonothioic dichloride to give mono addition of one thiol in good yield, according to the following equation:

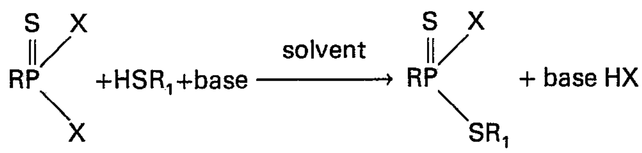


In the above formulae: R is alkyl of 1 to 6 carbon atoms, particularly methyl or ethyl; $R_1$ is an tert-alkyl of 4 to 8 carbon atoms, particularly, tert.-butyl; and X is halogen, particularly chlorine.

Suitable reaction solvents include water and organic solvents. With water the base is advantageously an inorganic base such as sodium hydroxide. With organic solvents the base is advantageously a tertiary amine such as trimethylamine, triethylamine, pyridine, dimethyl aniline or diethyl aniline.

Suitable organic solvents include benzene, toluene, cyclohexane, acetone and 2-butanone.

The reaction is conducted at a temperature of between 20°C to 100°C. The temperature is critical only during the addition of the base which is introduced at a temperature of below 50°C for the best yields. It has been found advantageous to add the tertiary amine to the other reactants at a temperature of 20°C to 30°C and then to heat the entire reaction mixture to a temperature of about 70°C to 80°C to complete the reaction.

The reaction is normally carried out with an approximately equal molar ratio of the phosphonothioic dichloride, thiol and the base. An excess of about 10 to 20% of the phosphonothioic dichloride can be used relative to the other reactants. However, the use of a slight excess of the thiol and the base relative to the phosphonothioic dichloride (5—10% excess) did not appreciably affect the yield. The following examples illustrate the process of this invention and the production of several specific compounds of the invention.

Example 1
S-tert.-butyl methylphosphonodithioic chloride

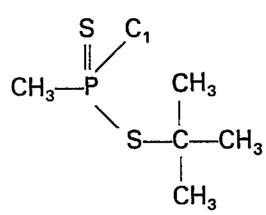

To a solution of methylphosphonothioic dichloride (128.5 g, 0.86 mole) in 500 ml toluene, was added 2-methyl-2-propanethiol (54 g, 0.6 mole) in one portion. Triethylamine (60 g, 0.6 mole) was added dropwise at room temperature (25°C—30°C) while stirring the reaction mixture. The mixture was let stand overnight, then heated to 70—80°C for three hours, then allowed to cool to room temperature. The reaction mixture was successively washed with water, cold 5% HCl solution, and water again, and dried over anhydrous $MgSO_4$. Then the solvent was stripped off to obtain a crude oily product which was distilled under vacuum. One hundred grams of the title product was obtained (82.3% yield), b.p. 72—75°C/0.2 mm. $^1H$-NMR spectrum in chloroform-d ($Me_4Si$) confirmed the structure.

Example 2
S-tert.-butyl ethylphosphonodithioic chloride

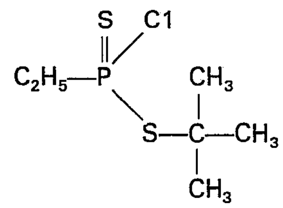

To a solution of ethylphosphonothioic dichloride, (16.3 g, 0.1 mole) in 50 ml toluene, was added in one portion 10 g of 2-methyl-2-propanethiol (0.11 mole). Triethylamine (12 g, 0.12 mole) was added dropwise while stirring the reaction mixture. Stirring was continued after the complete addition of the amine overnight at room temperature. The reaction mixture was heated up to 70°C for one half hour, and let cool to room temperature. Then it was washed successively with water, cold 5% solution HCl, and again water and dried over anhydrous $MgSO_4$. The solvent was stripped off and the residual oil was subjected to high vacuum (0.05 mm) at room temperature for one hour. This product weighed 16.5 g (76% yield). The pure compound boils at 75—78°C/0.7 mm. It has an $^1H$—NMR spectrum that conforms with the structure of the title compound.

Example 3
This example illustrates the utility of a compound prepared by the process of this invention as an intermediate in the synthesis of an insecticide and nematocide.

S-n-propyl S-tert.-butyl ethylphosphonotrithioate

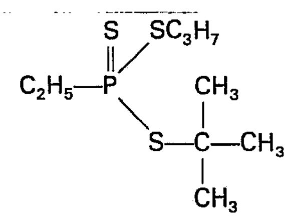

To a solution of S-tert.-butyl ethylphosphonodithioic chloride (15 g, 0.07 mole) in 50 ml 2-butanone, was added 1-propanethiol (6.6 g, 0.09 mole), and triethylamine (10 g, 0.1 mole). The mixture was refluxed under nitrogen for three hours, then let stand at room temperature overnight. The amine hydrochloride was filtered and the solvent was evaporated under vacuum. Ether (100 ml) was added and the solution was washed with water (50 ml), followed by 5% NaOH solution (50 ml), then water (twice 50 ml each). The ether solution was dried over anhydrous magnesium sulfate and the solvent was evaporated under vacuum. The residual oil was distilled to give the title compound, b.p. 102°C/0.4 mm. The product weighed 14.5 g (81% of theoretical yield). $^1H$—NMR spectrum confirmed the structure.

The above compound finds particular utility in the control of corn rootworm and exhibits low phytotoxicity to corn.

**Claims**

1. The process of preparing compounds of the formula

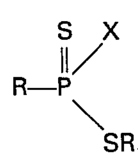

in which R is alkyl of 1 to 6 carbon atoms; $R_1$ is tert-alkyl of 4 to 8 carbon atoms and X is halogen which comprises reacting

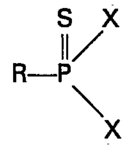
with $R_1$ SH

in a solvent in the presence of a base at a temperature of 20°C to 100°C; in which R, $R_1$ and X are as defined above.

2. The process of claim 1 in which $R_1$ is tert-butyl.
3. The process of any one of claims 1—2 in which X is chloro.
4. The process of any of claims 1—3 in which said solvent is benzene, toluene, cyclohexane, acetone or 2-butanone.
5. The process of any one of claims 1—4 in which said base is a tertiary amine and is trimethylamine, triethylamine, pyridine, dimethylaniline or diethylaniline.
6. The process of claim 5 in which the tertiary amine is added to the other reactants dropwise at a temperature of 20°C to 30°C and the entire reaction mixture is then heated to a temperature of 70°C to 80°C.

**Revendications**

1. Procédé pour la préparation de composés de formule

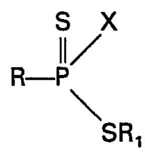

dans laquelle

— R est un alcoyle de 1 à 6 atomes de carbone; $R_1$ est un alcoyle tertiaire de 4 à 8 atomes de carbone et X est un halogène, qui consiste à faire réagir

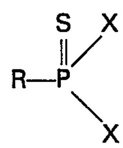
avec $R_1$ SH

dans un solvant en présence d'une base à une température de 20° à 100°C, dans lesquels R, $R_1$ et X sont comme définis ci-dessus.

2. Procédé selon la revendication 1, caractérisé en ce que $R_1$ est un tertio-butyle.
3. Procédé selon une des revendications 1 et 2, caractérisé en ce que X est un chloro.
4. Procédé selon l'une des revendications 1 à 3, caractérisé en ce que le solvant est le benzène, le toluène, le cyclohexane, l'acétone ou la butan-2-one.
5. Procédé selon l'une des revendications 1 à 4, caractérisée en ce que la base est une amine tertiaire, telle que triméthylamine, triéthylamine, pyridine, diméthylaniline ou diéthylaniline.
6. Procédé selon la revendication 5 caractérisée en ce que l'amine tertiaire est ajoutée goutte à goutte aux autres réactifs, à une température de 20 à 30°C et que l'ensemble du milieu réactionnel est ensuite chauffé à une température de 70 à 80°C.

**Patentansprüche**

1. Verfahren zur Herstellung von Verbindungen der Formel

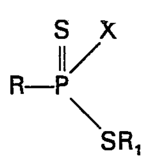

wobei R ein Alkyl mit 1 bis 6 Kohlenstoffatomen ist, $R_1$ ein Alkyl mit 4 bis 8 Kohlenstoffatomen

bedeutet, das alpha-verzweigt ist und X halogen ist, gekennzeichnet dadurch, daß eine Verbindung der Formel

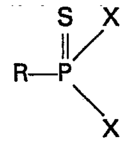

mit einer Verbindung der Formel $R_1SH$ in Anwesenheit einer Base bei einer Temperatur von ca. 20°C bis 100°C in einem Lösungsmittel umgesetzt wird,

2. Verfahren nach dem Anspruch 1, wobei R, $R_1$ und X wie vorher definiert sind, gekennzeichnet dadurch, daß $R_1$ tert-butyl ist.

3. Verfahren nach einem der Ansprüche 1 und 2, gekennzeichnet dadurch, daß X Chlor ist.

4. Verfahren nach einem der Ansprüche 1 bis 3, gekennzeichnet dadurch, daß das Lösungsmittel Benzol, Toluol, Zyklohexan, Azeton oder 2-Butanon ist.

5. Verfahren nach einem der Ansprüche 1 bis 4, gekennzeichnet dadurch, daß die Base ein Tertiäramin, beispielsweise Trimethylamin, Triäthylamin, Pyridin, Dimethylanilin oder Diäthylanilin ist.

6. Verfahren nach dem Anspruch 5, gekennzeichnet dadurch, daß das Tertiäramin bei einer Temperatur von ca. 20°C bis 30°C tropfenweise zu den anderen Reaktionsmischung dann auf 70°C bis 80°C erwärmt wird.